Europäisches Patentamt

European Patent Office

Office européen des brevets

(19)

(11) Veröffentlichungsnummer: **0 310 601**
**B1**

(12) **EUROPÄISCHE PATENTSCHRIFT**

(45) Veröffentlichungstag der Patentschrift: **14.03.90**

(51) Int. Cl.⁵: **G 01 L 19/00**

(21) Anmeldenummer: **87902424.8**

(22) Anmeldetag: **07.05.87**

(86) Internationale Anmeldenummer:
**PCT/DE87/00203**

(87) Internationale Veröffentlichungsnummer:
**WO 87/07374 03.12.87 Gazette 87/27**

(54) VORRICHTUNG ZUM ANSCHLUSS EINES DRUCKMESSGERÄTES AN EINE ROHRLEITUNG.

(30) Priorität: **27.05.86 DE 3617804**
**31.03.87 DE 3710638**

(43) Veröffentlichungstag der Anmeldung:
**12.04.89 Patentblatt 89/15**

(45) Bekanntmachung des Hinweises auf die
Patenterteilung:
**14.03.90 Patentblatt 90/11**

(84) Benannte Vertragsstaaten:
**AT BE CH DE FR GB IT LI LU NL SE**

(56) Entgegenhaltungen:
**GB-A- 902 459**
**US-A-3 045 512**
**US-A-3 198 206**
**US-A-3 788 345**
**US-A-4 204 559**

(73) Patentinhaber: **BKM BOLENDER-KUBITZ
MASCHINENKONSTRUKTION GMBH
Bandstahlstrasse 4
D-5800 Hagen 1 (DE)**

(72) Erfinder: **BOLENDER, Klaus
Auf dem Lölfert 35
D-5800 Hagen 5 (DE)**
Erfinder: **KUBITZ, Dieter
Gehrstr. 7
D-5800 Hagen 1 (DE)**

(74) Vertreter: **Patentanwälte Dipl.-Ing. Conrad
Köchling Dipl.-Ing. Conrad-Joachim Köchling
Fleyer Strasse 135
D-5800 Hagen 1 (DE)**

EP 0 310 601 B1

**Beschreibung**

Die Erfindung betrifft eine Vorrichtung zum Anschluß eines den Druck von Fluiden, insbesondere Hydrauliköl, messenden Gerätes an eine unter Mediumdruck stehende Rohrleitung gemäß Oberbegriff des Patentanspruches 1 bzw. 16.

Insbesondere bei hydraulischen Geräten ist es zum Beispiel zur Fehlersuche dienlich und vorteilhaft, den jeweils tatsächlichen Mediumdruck in bestimmten Bereichen einer Druckmedium führenden Rohrleitung zu kennen.

Zu diesem Zweck ist durch die US—A—37 88 345 schon eine gattungsgemäße Vorrichtung bekanntgeworden, mittels derer an beliebigen Stellen einer Rohrleitung ein Druckmeßgerät angebracht werden kann, ohne daß hierzu die Rohrleitung entleert werden müßte. Der Anschluß eines Druckmeßgerätes ist hierdurch in kürzester Zeit zu realisieren.

Ausgehend von diesem Stand der Technik liegt der Erfindung die Aufgabe zugrunde, eine solche Vorrichtung mit Bohrern unterschiedlicher Art und unterschiedlichen Durchmessers bestücken zu können, ohne daß hierzu völlig anders dimensionierte Teile der Vorrichtung notwendig wären.

Zur Lösung dieser Aufgabe schlägt die Erfindung die Vorrichtung gemäß Anspruch 1 vor.

Durch diese Ausbildung ist erreicht, daß der Sattel mit zueinander unterschiedlichen Bohrern bestückt werden kann, woraus unter anderem die Herstellungs- und Lagervereinfachungen resultieren.

Auch die Montage und die Dichtigkeit der Vorrichtung ist hierdurch nicht beeinträchtigt. Zudem umfaßt die Vorrichtung relativ wenige, preiswert herstellbare Einzelteile.

Vorteilhafte Ausgestaltungen der Erfindung sind in den Ansprüchen 2 bis 4 offenbart:

Hierdurch wird einerseits die Bildung nicht abbrechender und mit der Rohrleitung in Verbindung bleibender Fließspäne begünstigt, andererseits können auf den Bohrer hohe Drehmomente und hohe Vorschubkräfte ausgeübt werden.

Eine bevorzugte, sowohl fertigungstechnisch günstige als auch funktionssichere Gestaltung einer vorbeschriebenen Einzelheit kennzeichnet sich durch einen relativ kurzen Spitzbohrer mit einem sich koaxial anschließenden, gegenüber dessen Bohrdurchmesser größeren, zylindrischen Führungsschaft, an welchen sich in Richtung zu dem der Bohrerspitze abgewandten Ende hin eine im Nenndurchmesser größere Außengewindezone mit einem am freien Endteil angeordneten, von außen zugänglichen Schlüsselansatz koaxial anschließt, wobei vorzugsweise zudem der Spitzbohrer eine relativ zum Bohrdurchmesser etwa gleichgroße Länge aufweist (Ansprüche 5 und 6).

Außerdem ist es vorteilhaft, wenn die Querbohrung im Bereich des Spitzbohrers in die Bohrerführung einmündet, so daß die Bohrerführung eng toleriert werden kann (Anspruch 7).

Eine bevorzugte, einfache Abdichtung der Vorrichtung ist in Anspruch 8 gekennzeichnet.

Weitere vorteilhafte Ausgestaltungen sind in der Ansprüchen 9 und 10 offenbart.

Um eine lagerichtige Anordnung und auch eine lagesichere Halterung der Vorrichtung an einer Rohrleitung zu erzwingen bzw. sicherzustellen, ist es vorteilhaft, wenn der Sattel an der der Rohrleitung zugewandten Seite eine letzterer angepaßte, rinnenförmige Ausnehmung aufweist, in welche die zur Aufnahme des Bohrers bestimmte Bohrung einmündet, und daß eine am Sattel gehalterte und zur vorgenannten Sattelseite hin anspannbare Traverse vorgesehen ist, in der der rinnenförmigen Ausnehmung des Sattels gegenüber eine letzterer entsprechend ausgebildete, rinnenförmige Ausnehmung vorgesehen ist, daß sich beide Ausnehmungen zu einer die Rohrleitung an über deren gesamten Umfang verteilt angeordneten Stellen angreifende Spanneinheit ergänzen, wobei vorzugsweise zudem die rinnenförmigen Aussparungen kreisbogenförmig profiliert sind und insbesondere ferner sich jeweils nahezu über den halben Rohrleitungsumfang erstrecken (Ansprüche 11 und 12).

Hierzu kennzeichnet sich eine vorteilhafte Weiterbildung darin, daß in die Ausnehmungen wahlweise einsetzbare, über ihre gesamten Längen gleiche Dicken aufweisende Schalen vorgesehen sind, und daß in der in die Sattelausnehmung eingesetzten Schale eine vom Bohrer durchgreifbare Bohrung angeordnet ist, wobei vorzugsweise zudem in die Sattelbohrung eine den Bohrer mit Spiel umfassende Ringdichtung eingesetzt ist, die sich mit ihrer einen Stirnseite an der Sattelausnehmung und mit der anderen Stirnseite an der Rohrleitung abstützt. Hierdurch ist die vorbeschriebene Vorrichtung für Rohrleitungen zueinander unterschiedlicher Durchmesser anwendbar (Ansprüche 13 und 14).

Neben dem eingangs genannten Stand der Technik sind aus der US—A—30 45 512, der GB—A 902 459, der US—A—42 04 559 und der US—A—31 98 206 gattungsgemäße Vorrichtungen bekannt, aus denen teilweise Merkmale der abhängigen Patent ansprüche zu entnehmen sind.

Eine parallele Lösung der eingangs gestellten Aufgabe ist im Anspruch 16 bezeichnet.

Für diese Ausführungsform gelten die gleichen Vorteile, die bezüglich der Lösung gemäß Anspruch 1 aufgeführt sind.

Darüber hinaus wird durch die Anwendung des Dornes, dessen Spitze die Rohrwandung durchbohren kann, ohne daß Späne erzeugt werden, eine zusätzliche Sicherheit erreicht.

Beim Eindrücken des Dornes in die Rohrwandung findet quasi ein Fließpreßvorgang statt, bei dem zunächst Rohrwandungsmaterial vom Dorn entgegen dessen Eindringrichtung als Kragen nach außen gedrängt wird und dann bei tieferem Eindringen eine Aufwerfung in Eintreibrichtung entsteht, die schließlich von der Dornspitze durchdrungen wird. Es wird so eine relativ große Bohrung erzeugt, ohne daß schädliche Späne entstehen können. Durch die große Bohrung wird die Meßgenauigkeit für das Druckmeßgerät verbessert, weil die große Bohrung keine Drosselstelle darstellt. Auch große Bohrungstiefen bzw. Wandstärken sind infolgedessen unproblematisch.

Vorteilhafte Ausgestaltungen hierzu sind in den Ansprüchen 17 bis 19 offenbart.

Hierdurch wird die Formung eines Loches erheblich begünstigt, wobei hohe Drehmomente und hohe Vorschubkräfte ausgeübt werden können.

Weitere Ausgestaltungen sind in den Ansprüchen 20 bis 29 bezeichnet.

Ausführungsbeispiele der Erfindung sind in den Zeichnungen dargestellt und im folgenden näher beschrieben.

Es zeigt:
Fig. 1 eine Vorrichtung gemäß Erfindung;
Fig. 2 eine Variante.

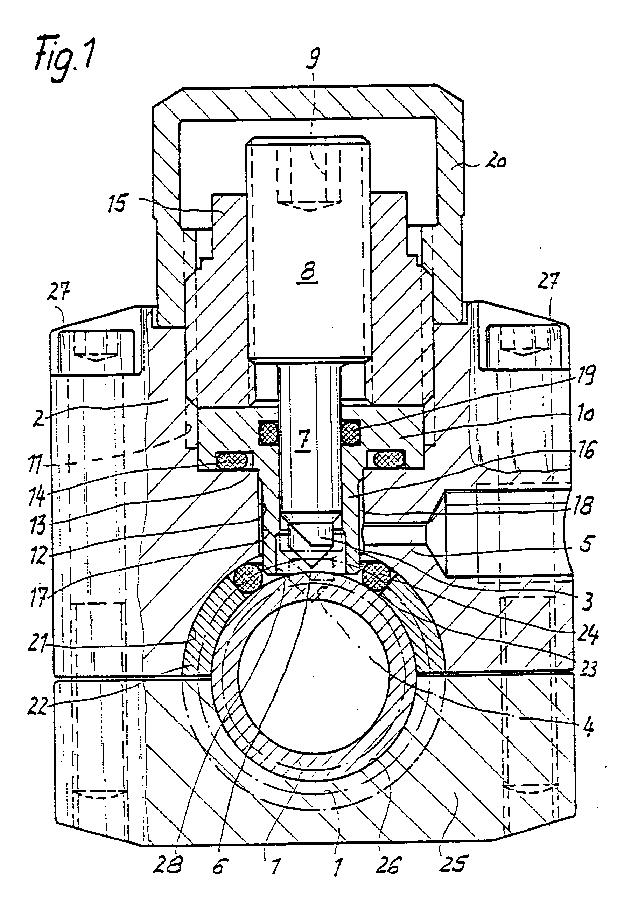

Die Figur 1 zeigt eine Vorrichtung zum Anschluß eines Druckmeßgerätes an eine Rohrleitung im Längsschnitt.

Diese Vorrichtung umfaßt im wesentlichen einen an eine Druckmedium führende Rohrleitung 1 dichtschließend anspannbaren Sattel 2, einen im Sattel 2 zur Rohrleitung 1 radial gerichteten, axial geführten und begrenzt verschraubbaren Spitzbohrer 3 und eine im Sattel 2 angeordnete, mit dem Bohrloch 4 der Rohrleitung 1 verbundene Querbohrung 5, die zum Anschluß eines nicht dargestellten Druckmeßgerätes bestimmt ist.

Der relativ kurze Spitzbohrer 3, dessen Länge samt Spitze 6 etwa dem Bohrdurchmesser entspricht, hat einen an dessen der Spitze 6 abgewandten Ende koaxial anschließenden, angeformten, zylindrischen Führungsschaft 7 und eine an letzteren koaxial anschließende angeordnete Außengewindezone 8.

Der Durchmesser des Führungsschaftes ist etwa 1 1/2 mal so groß als der Bohrdurchmesser des Spitzbohrers 3, während der Nenndurchmesser der Außengewindezone 8 etwa dem doppelten Durchmesser des Führungsschaftes 7 entspricht. In der freien Stirnseite der Außengewindezone 8, welche aus dem Sattel 2 herausragt, ist ein als Innenvielkant ausgebildeter Schlüsselansatz 9 angeordnet.

In den Sattel 2 ist eine Bohrbüchse 10 eingesetzt. Hierzu ist im Sattel 2 eine an der Bohrerspitze 6 abgewandten Seite des Sattels ausmündende Gewindebohrung 11 angeordnet, die in Richtung zur Bohrungsspitze 6 hin in eine zur Gewindebohrung koaxial angeordnete und gegenüber letztere im Durchmesser kleinere zylindrische Bohrung 12 übergeht.

Die Bohrbüchse 10, deren Außendurchmesser kleiner als der Kerndurchmesser der Gewindebohrung 11 ist, ist in die Gewindebohrung 11 so weit eingesteckt, bis sie an den Mündungsrandteilen der zylindrischen Bohrung 12 anliegt. In der den vorgenannten Mündungsrandteilen zugewandten Stirnseite der Bohrbüchse 10 ist eine Ringnut 13 angeordnet, in welche eine Ringdichtung 14 eingesetzt ist, welche mittels eines in die Gewindebohrung 11 des Sattels 2 eingeschraubten Schraubringes über die Bohrbüchse 10 an die vorgenannten Mündungsrandteile der Bohrung 12 dichtschließend angepreßt ist.

In eine Gewindebohrung des Schraubringes 15 ist die Außengewindezone 8 des Spitzbohrers 3 axial begrenzt eingeschraubt. Von der Bohrbüchse 10 strebt ein angeformter, kreisringförmig profilierter Stutzen 16 ab, der mit einem Schiebesitz in die zylindrische Bohrung 12 eingesteckt ist.

Ferner hat der Stutzen 16 eine bis zu seinem freien Ende hin reichende, im Durchmesser verminderte Zone 17.

In dem von letzterer und der Bohrung 12 gebildeten Ringspalt 18 mündet die Querbohrung 5 ein.

In der vom Führungsschaft 7 durchgriffenen Bohrung der Bohrbüchse 10 ist in einer Ringnut eine weitere Ringdichtung 19 angeordnet, die den Führungsschaft 7 des Spitzbohrers 3 dichtschließend umfaßt.

Auf den Schraubring 15 ist eine axial am Sattel 2 sich abstützende Schraubkappe 20 aufgeschraubt.

In der letzterer abgewandten Seite des Sattels 2 ist eine zur axialen Erstreckung des Spitzbohrers 3 rechtwinklig verlaufende, halbkreisförmig profilierte Ausnehmung 21 vorgesehen, in welche eine dieser angepaßte Halbschale 22 formschlüssig eingesetzt ist, welche die Rohrleitung 1 über die Hälfte ihres Umfanges formschließend umfaßt.

In der Halbschale 22 ist eine vom Spitzbohrer 3 mit Spiel durchgriffene Bohrung 23 angeordnet, in welche eine Ringdichtung 24 eingesetzt ist, die sich stirnseitig an der Ausnehmung 21 und an der Rohrleitung 1 dichtschließend abstützt.

Zur Halterung der Rohrleitung 1 ist eine Traverse 25 vorgesehen, welche eine der Rohrleitung 1 entsprechend profilierte Ausnehmung 26 aufweist. Die Traverse 25 ist mit mindestens zwei, den Sattel 2 durchgreifenden Spannschrauben 27 an den Sattel 2 angespannt, wobei die Köpfe der Spannschrauben 27 sich vorzugsweise am Sattel 2 abstützen.

Wie in strichpunktierten Linien eingezeichnet, können in die Ausnehmungen 21 und 26 Halbschalen anderer Dicke wahlweise eingesetzt werden, um die Vorrichtung auch für Rohrleitungen anderen Durchmessers anwenden zu können. Ist die Vorrichtung wie dargestellt an die Rohrleitung 1 dichtschließend angespannt und ist im Querkanal 5 ein Druckmeßgerät dichtschließend befestigt, ist zur Verbindung der unter Mediumdruck stehenden Rohrleitung 1 mit dem Druckmeßgerät nur der lediglich Fließspäne erzeugende Spitzbohrer 3 so weit in Richtung zur Rohrleitung 1 hin zu verschrauben, bis dessen Spitze 6, wie in gestrichelten Linien dargestellt, die Innenseite der Rohrleitungswand angeschnitten hat, wonach Druckmedium aus der Rohrleitung 1 zur Gewindebohrung 5 und zum angeschlossenen Druckmeßgerät gelangen kann.

Normalerweise verbleibt der Spitzbohrer 3 in der Vorrichtung.

Es ist jedoch auch möglich, bei druckloser Rohrleitung 1 den Spitzbohrer 3 aus der Vorrichtung herauszuschrauben und anstelle dessen einen Verschlußstopfen anzuordnen, so daß der Spitzbohrer 3 zu seiner weiteren Anwendung zur Verfügung steht.

Bevorzugterweise greift der Stutzen 16 in die, insbesondere als O-Ring ausgebildete Ringdichtung mindestens annähernd spiellos ein, womit einerseits eine lagerichtige und lagesichere Anordnung der Ringdichtung 24 und somit auch der Halbschale 22 relativ zum Spitzbohrer 3 erzwungen wird.

Andererseits ist die Ringdichtung 24 durch den Stutzen gegen Bohrspäne geschützt angeordnet. Weiterhin ist es vorteilhaft, wenn die axial verlaufende Bohrung des Stutzens 16 in einer Bohrungserweiterung 28 endet, um die Bohrspan-Abführung nach oben zu begünstigen.

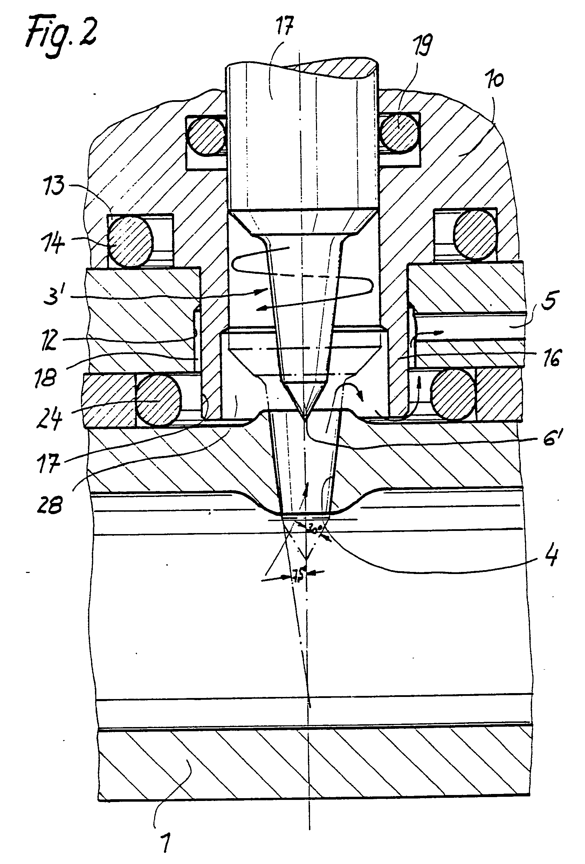

Beim Ausführungsbeispiel gemäß Figur 2 sind im wesentlichen gleiche Bezugszeichen verwendet.

Hierbei ist der Spitzbohrer 3 durch einen konischen Dorn 3' ersetzt worden, dessen relativ kurze Spitze 6' im Vergleich zum Bohrlochdurchmesser etwa gleiche Länge aufweist. Der Dorn kann aus Werkzeugstahl hoher Güte oder anderem geeignetem Material bestehen. Da die Hydraulikrohre aus relativ weichem Material bestehen (z.B. ST35) kann der Dorn 3' die gewünschte Bohrung 4 erzeugen. Der Dorn 3' ist in durchgezogenen Linien in einer zurückgezogenen Stellung nach vollendetem Lochformvorgang gezeigt, in strichpunktierten Linien in der tiefsten Einbohrlage.

Der Dorn 3' weist über seine Länge, die größer ist als der Wandungsstärke des Rohres 1 entspricht, Zonen unterschiedlicher Konizität auf, was dem Lochformungsvorgang zuträglich ist.

Die Spitze 6' weist einen Gesamtkonuswinkel von 60°, der Zwischenteil einen solchen von 15° auf, während der Übergang von diesem zum Schaft 7 gerundet oder geschrägt ist.

Auf diese Weise wird auch eine Durchmesserverringerung vom Schaft 7 bis zur Spitze 6' erreicht.

Beim Drehen des Schaftes 7 durch ein in den Schlüsselansatz 9 eingefügtes Werkzeug, wird zu Beginn des Lochformens das Wandungsmaterial entgegen der Vorschubrichtung der Spitze 6' verdrängt und bildet einen Kragen um die Einringstelle. Mit zunehmendem Vorschub des Dornes 3' dringt auch das Zwischenstück in das erzeugte Loch ein und verdrängt zunehmend Rohrmaterial, bis schließlich die Spitze 6' und wiederum folgend das Zwischenstück des Dornes 3' rohrinnenseitig eine Vorwölbung erzeugt, die dann von der Spitze 6' gelocht wird.

Auf diese Weise entsteht ein relativ großes Loch 4, ohne daß Späne oder dergleichen erzeugt werden, die für das zu überprüfende hydraulische System schädlich wären.

Un übrigen ist die Funktion wie bei Figur 1 beschrieben, wobei der Dorn 3' nach Erzeugen des Loches 4 zurückgezogen wird.

**Patentansprüche**

1. Vorrichtung zum Anschluß eines den Druck von Fluiden, insbesondere Hydrauliköl, messenden Gerätes an eine unter Mediumdruck stehende Rohrleitung mit einem an die Rohrleitung (1) dichtschließend anspannbaren Sattel (2), in dem ein zur Rohrleitung (1) hinzielendes, axial geführtes und von außen her verdrehbares Instrument dichtschließend und so axial begrenzt verschraubbar gelagert ist, daß lediglich die Instrumentspitze die Innenseite der Rohrleitung (1) geringfügig anschneidet, wobei eine Bohrung vorgesehen ist, an welche ein Druckmeßgerät dichtschließend anschließbar ist, dadurch gekennzeichnet, daß das Instrument ein Spitzbohrer (3) ist, der lediglich Fließspäne erzeugt, die Anschlußbohrung für das Druckmeßgerät eine in die nach außen abgedichtete Bohrerführung einmündende Querbohrung ist, daß in den Sattel (2) eine zum Spitzbohrer (3) koaxial angeordnete und mit dem Führungsschaft (7) zusammenwirkende Bohrbüchse (10) austauschbar eingesetzt ist, die mit dem Führungsschaft (7) zusammenwirkende Ringdichtung (19) in der Bohrbüchse (10) gehaltert ist, im Sattel (2) eine zum Bohrer (3) koaxial angeordnete und gegenüber dem Bohrer (3) im Durchmesser größere Gewindebohrung (11) vorgesehen ist, die in Richtung zu der zur Anlage der Rohrleitung (1) bestimmten Sattelseite hin in eine im Durchmesser kleinere, zylindrische und zur Gewindebohrung (11) des Sattels (2) koaxial angeordnete Bohrung (12) übergeht, in die Gewindebohrung (11) die Bohrbüchse (10) eingesteckt sowie an die Mündungsrandteile der zylindrischen Bohrung (12) dichtschließend angelegt ist, ferner die Bohrbüchse (10) einen mit engem Schiebesitz in die zylindrische Bohrung (12) eingesteckten, und vom Führungsschaft (7) des Spitzbohrers (3) durchgriffenen Stutzen (16) aufweist, die Bohrbüchse (10) mittels eines in die Gewindebohrung (11) des Sattels (2) eingeschraubten Schraubringes (15) an die vorgenannten Mündungsrandteile der zylindrischen Bohrung (12) angespannt ist und der Schraubring (15) eine Gewindebohrung aufweist, in welche die Außengewindezone (8) des Spitzbohrers (3) eingeschraubt ist.

2. Vorrichtung nach Anspruch 1, dadurch gekennzeichnet, daß der Bohrdurchmesser des Spitzbohrers (3) etwa der halben Rohrwanddicke gleicht und daß insbesondere zudem der Spitzwinkel des Spitzbohrers (3) ca. 90° beträgt.

3. Vorrichtung nach Anspruch 1 oder 2, dadurch gekennzeichnet, daß der Spitzbohrer (3) einen großen Spanwinkel aufweist.

4. Vorrichtung nach einem der Ansprüche 1 bis 3, dadurch gekennzeichnet, daß die Verschraubung eine gegenüber der Länge der Bohrerspitze (6) kleinere Steigung aufweist.

5. Vorrichtung nach einem der Ansprüche 1 bis 4, gekennzeichnet durch einen relativ kurzen Spitzbohrer (3) mit einem sich daran koaxial anschließenden, gegenüber dessen Bohrdurchmesser größeren, zylinderischen Führungsschaft (7), an welchen sich in Richtung zu dem der Bohrerspitze (6) abgewandten Ende hin eine im Nenndurchmesser größere Außengewindezone (8) mit einem am freien Endteil angeordneten und von außen zugänglichen Schlüsselansatz (9) koaxial anschließt.

6. Vorrichtung nach Anspruch 5, dadurch gekennzeichnet, daß der Spitzbohrer (3) eine relativ zum Bohrdurchmesser etwa gleich große Länge aufweist.

7. Vorrichtung nach einem der Ansprüche 5 oder 6, dadurch gekennzeichnet, daß die Querbohrung (5) im Bereich des Spitzbohrers (3) in die Bohrerführung einmündet.

8. Vorrichtung nach einem der Ansprüche 1 bis 7, dadurch gekennzeichnet, daß eine am Sattel (2) gehalterte, die Mündung der Bohrerführung umfassende und an der Rohrleitung (1) sich abstützende Ringdichtung (24) und eine weitere den Führungsschaft (7) umfassende Ringdichtung (19) angeordnet sind.

9. Vorrichtung nach einem der Ansprüche 1 bis 8, dadurch gekennzeichnet, daß der Schraubring (15) aus dem Sattel (2) herausragt und daß auf dessen Außengewindezone eine Schutzkappe (20) aufgeschraubt ist.

10. Vorrichtung nach Anspruch 9, dadurch gekennzeichnet, daß die Schraubkappe (20) als auf den Spitzbohrer (3) wirksame Schraubensicherung ausgebildet ist.

11. Vorrichtung nach einem der Ansprüche 1 bis 10, dadurch gekennzeichnet, daß der Sattel (2) an der der Rohrleitung (1) zugewandten Seite eine letzterer angepaßte, rinnenförmige Ausnehmung (21) aufweist, in welche die zur Aufnahme des Bohrers (3) bestimmte Bohrung einmündet, und daß eine am Sattel (2) gehalterte und zur vorgenannten Sattelseite hin anspannbare Traverse (25) vorgesehen ist, in der der rinnenförmigen Ausnehmung (21) des Sattels (2) gegenüber eine letzterer entsprechend ausgebildete rinnenförmige Ausnehmung (26) so vorgesehen ist, daß sich beide Ausnehmungen (21, 26) zu einer die Rohrleitung (1) an über deren gesamten Umfang verteilt angeordneten Stellen angreifenden Spanneinheit ergänzen.

12. Vorrichtung nach Anspruch 11, dadurch gekennzeichnet, daß die rinnenförmigen Aussparungen (21, 26) kreisbogenförmig profiliert sind und insbesondere ferner sich jeweils nahezu über den halben Rohrleitungsumfang erstrecken.

13. Vorrichtung nach Anspruch 12, dadurch gekennzeichnet, daß in die Ausnehmung (21, 26) wahlweise einsetzbare, über ihre gesamte Längen gleiche Dicken aufweisende Schalen (22) vorgesehen sind und daß in der in die Sattel-Ausnehmung (21) eingesetzten Schale (22) eine vom Bohrer (3) durchgreifbare Bohrung (23) angeordnet ist.

14. Vorrichtung nach Anspruch 13, dadurch gekennzeichnet, daß in die Sattelbohrung (23) eine den Bohrer (3) mit Spiel umfassende Ringdichtung (24) eingesetzt ist, die sich mit ihrer einen Stirnseite an der Sattel-Ausnehmung (21) und mit der anderen Stirnseite an der Rohrleitung (1) abstützt.

15. Vorrichtung nach einem der Ansprüche 1 bis 14, dadurch gekennzeichnet, daß der in die zylindrische Bohrung (12) des Sattels (2) mit engem Schiebesitz eingesteckte Stutzen (16) der Bohrbüchse (10) an seinem freien Endteil eine im Durchmesser verminderte Zone (17) aufweist und daß in den von letzterer und der zylindrischen Bohrung (12) des Sattels (2) gebildeten und zur Sattel-Ausnehmung (21) hin offenen Ringspalt (18) die Querbohrung (5) einmündet.

16. Vorrichtung zum Anschluß eines den Druck von Fluiden, insbesondere von Hydrauliköl, messenden Gerätes an eine unter Mediumdruck stehende Rohrleitung, mit einem an die Rohrleitung (1) dichtschließend anspannbaren Sattel (2), in dem ein zur Rohrleitung (1) hinzielender, axial geführter und von außen her verdrehbarer spitzer Dorn (3') dichtschließend und axial begrenzt verschraubbar gelagert ist, so daß die Spitze (6') des Dornes (3') die Innenseite der Rohrleitung (1) durchbohrt, wobei eine Bohrung vorgesehen ist, an welche ein Druckmeßgerät dichtschließend anschließbar ist, dadurch gekennzeichnet, daß in die nach außen abgedichtete Bohrerführung eine Querbohrung (5) als Anschlußbohrung für das Druckmeßgerät einmündet, daß in den Sattel (2) eine zum Dorn (3') koaxial angeordnete und mit dem Führungsschaft (7) zusammenwirkende Bohrbüchse (10) austauschbar eingesetzt ist, die mit dem Führungsschaft (7) zusammenwirkende Ringdichtung (19) in der Bohrbüchse (10) gehaltert ist, im Sattel (2) eine zum Dorn (3') koaxial angeordnete und gegenüber dem Dorn (3') im Durchmesser größere Gewindebohrung (11) vorgesehen ist, die in Richtung zu der zur Anlage der Rohrleitung (1) bestimmten Sattelseite hin in eine im Durchmesser kleinere, zylindrische und zur Gewindebohrung (11) des Sattels (2) koaxial angeordnete Bohrung (12) übergeht, in die Gewindebohrung (11) die Bohrbüchse (10) eingesteckt sowie an die Mündungsrandteile der zylindrischen Bohrung (12) dichtschließend angelegt ist, ferner die Bohrbüchse (10) einen mit engem Schiebesitz in die zylindrische Bohrung (12) eingesteckten, und vom Führungsschaft (7) des Dornes (3') durchgriffenen Stutzen (16) aufweist, die Bohrbüchse (10) mittels eines in die Gewindebohrung (11) des Sattels (2) eingeschraubten Schraubringes (15) an die vorgenannten Mündungsrandteile der zylindrischen Bohrung (12) angespannt ist und der Schraubring (15) eine Gewindebohrung aufweist, in welche die Außengewindezone (8) des Dornes (3') eingeschraubt ist.

17. Vorrichtung nach Anspruch 16, dadurch gekennzeichnet, daß der Dorn (3') konisch ausgebildet ist.

18. Vorrichtung nach Anspruch 16 oder 17, dadurch gekennzeichnet, daß die Spitze (6') des Dornes (3') einen Spitzwinkel von mindestens etwa 60° aufweist, der Konuswinkel des zwischen Spitze und zylindrischem Endteil etwa 15° beträgt, der Übergang vom Endteil zum Zwischenteil gerundet oder geschrägt ist und die Länge des Zwischenteiles mindestens gering größer als die Wandstärke der Rohrleitung ist.

19. Vorrichtung nach einem der Ansprüche 16 bis 18, dadurch gekennzeichnet, daß der Dorn (3') zwischen Spitze (6') und zylindrischem Endteil mehrfach abgestufte Konizitäten aufweist.

20. Vorrichtung nach einem der Ansprüche 16 bis 19, gekennzeichnet durch einen Dorn (3') mit einem sich daran koaxial anschließenden, gegenüber dessen maximalen Durchmesser größeren, zylindrischen Führungsschaft (7), an welchen sich in Richtung zu dem der Dornspitze (6') abgewandten Ende hin eine im Nenndurchmesser größere Außengewindezone (8) mit einem am freien Endteil angeordneten und von außen zugänglichen Schlüsselansatz (9) koaxial anschließt.

21. Vorrichtung nach Anspruch 20, dadurch gekennzeichnet, daß die Querbohrung (5) im Bereich des Dornes (3') in die Bohrerführung einmündet.

22. Vorrichtung nach einem der Ansprüche 16 bis 21, dadurch gekennzeichnet, daß eine am Sattel (2) gehalterte, die MÜndung der Dornführung umfassende und an der Rohrleitung (1) sich abstützende Ringdichtung (24) und eine weitere, den Führungsschaft (7) umfassende Ringdichtung (19) angeordnet sind.

23. Vorrichtung nach Anspruch 16, dadurch gekennzeichnet, daß der Schraubring (15) aus dem Sattel (2) herausragt und daß auf dessen Außengewindezone eine Schutzkappe (20) aufgeschraubt ist.

24. Vorrichtung nach Anspruch 23, dadurch gekennzeichnet, daß die Schraubkappe (20) als auf den Dorn (3') wirksame Schraubensicherung ausgebildet ist.

25. Vorrichtung nach einem der Ansprüche 16 bis 24, dadurch gekennzeichnet, daß der Sattel (2) an der der Rohrleitung (1) zugewandten Seite eine letzterer angepaßte, rinnenförmige Ausnehmung (21) aufweist, in welche die zur Aufnahme des Dornes (3') bestimmte Bohrung einmündet, und daß eine am Sattel (2) gehaltene und zur vorgenannten Sattelseite hin anspannbare Traverse (25) vorgesehen ist, in der der rinnenförmigen Ausnehmung (21) des Sattels (2) gegenüber eine letzterer entsprechend ausgebildete rinnenförmige Ausnehmung (26) so vorgesehen ist, daß sich beide Ausnehmungen (21, 26) zu einer die Rohrleitung (1) an über deren gesamten Umfang verteilt angeordneten Stellen angreifenden Spanneinheit ergänzen.

26. Vorrichtung nach Anspruch 25, dadurch gekennzeichnet, daß die rinnenförmigen Ausssparungen (21, 26) kreisbogenförmig profiliert sind und insbesondere ferner sich jeweils nahezu über den halben Rohrleitungsumfang erstrecken.

27. Vorrichtung nach Anspruch 26, dadurch gekennzeichnet, daß in die Ausnehmung (21, 26) wahlweise einsetzbare, über ihre gesamte Längen gleiche Dicken aufweisende Schalen (22) vorgesehen sind und daß in der in die Sattel-Ausnehmung (21) eingesetzten Schale (22) eine vom Dorn (3') durchgreifbare Bohrung 23 angeordnet ist.

28. Vorrichtung nach Anspruch 27, dadurch gekennzeichnet, daß in die Sattelbohrung (23) eine den Dorn (3') mit Spiel umfassende Ringdichtung (24) eingesetzt ist, die sich mit ihrer einen Stirnseite an der Sattel-Ausnehmung (21) und mit der anderen Stirnseite an der Rohrleitung (1) abstützt.

29. Vorrichtung nach einem der Ansprüche 16 bis 28, dadurch gekennzeichnet, daß der in die zylindrische Bohrung (12) des Sattels (2) mit engem Schiebesitz eingesteckte Stutzen (16) der Bohrbüchse (10) an seinem freien Endteil eine im Durchmesser verminderte Zone (17) aufweist und daß in den von letzterer und der zylindrischen Bohrung (12) des Sattels (2) gebildeten und zur Sattel-Ausnehmung (21) hin offenen Ringspalt (18) die Querbohrung (5) einmündet.

**Revendications**

1. Dispositif pour la mise en place d'un appareil de mesure de la pression des fluides, notamment d'huile hydraulique, sur une conduite soumise à la pression d'un milieu, ce dispositif comprenant une pièce en forme de selle (2) qui peut être maintenue contre la conduite (1) de manière à l'enserrer hermétiquement et dans laquelle se troue un instrument qui, dirigé vers la couduite (1) et guidé dans le sens axial, est monté de manière à pouvoir effectuer un mouvement de rotation commandé de l'extérieur en maintenant une fermeture hermétique et à pouvoir être vissé en effectuant un déplacement axial limité de telle manière que seule la pointe de l'instrument entame légèrement la surface intérieure de la conduite (1), la pièce en forme de selle comportant par ailleurs un alésage auquel peut se raccorder, d'une manière assurant une fermeture étanche, un appareil de mesure de la pression, caractérisé en ce que l'instrument en question est un foret à langue d'aspic (3) qui ne produit que des copeaux continus et que l'alésage auquel peut se raccorder l'appareil de mesure de la pression est un alésage transversal débouchant dans la cavité de guidage du foret hermétiquement isolée de l'extérieur, en ce que la pièce en forme de selle (2) contient une garniture de forage (10) qui y est engagée, en tant que pièce interchangeable, de manière à avoir le même axe que le foret (3) et à coopérer avec la tige de guidage (7), que le joint annulaire (19) qui coopère avec la tige de guidage (7) est maintenu dans la garniture de forage (10), que la pièce en forme de selle (2) comporte un alésage fileté (11) qui a le même axe que le foret (3) et a un diamètre plus grand que le foret (3) et qui, en allant dans la direction de la partie de la pièce en forme de selle qui s'applique contre la conduite (1), se prolonge par un alésage cylindrique (12) de plus petit diamètre, coaxial à l'aléage fileté (11) de la pièce en forme de selle (2), que la garniture de forage (10) est engagée dans l'alésage fileté (11) et s'applique contre les parties marginales délimitant l'entrée de l'alésage (12) de manière à assurer une fermeture hermétique, que la garniture de forage (10) comporte un prolongement (16) en forme de tubulure engagé dans l'alésage cylindrique (12), de manière à laisser libre un espace annulaire étroit, et traversé par la tige de guidage (7) du foret (3), que la garniture de forage (10) est serrée, au moyen d'un anneau de vissage (15) qui se visse, dans l'alésage fileté (11) de la pièce en forme de selle (2), contre les parois marginales déjà mentionnées qui délimitent l'entrée de l'alésage cylindrique (12) et que l'anneau de vissage (15) comporte un alésage fileté dans lequel se visse la partie (8) du foret (3) qui comporte un filetage extérieur.

2. Dispositif selon la revendication 1, caractérisé en ce que le diamètre de forage du foret (3) est approximativement égal à la moitié de l'épaisseur de paroi de la conduite et que, notamment, l'angle de la pointe du foret (3) est de 90° environ.

3. Dispositif selon l'une des revendication 1 ou 2, caractérisé en ce que le foret (3) a un grand angle de coupe.

4. Dispositif selon l'une des revendications 1 à 3, caractérisé en ce que le raccord à vis a un pas plus petit que la longueur de la pointe (6) du foret.

5. Dispositif selon l'une des revendications 1 à 4, caractérisé par un forret (3) relativement court associé à une tige de guidage cylindrique (7) qui le prolonge en lui étant coaxiale et a un diamètre plus grand que son diamètre de forage et qui, dans la direction de son extrémité située à l'opposé de la pointe de forage (6), se prolonge par une partie (8) de plus grand diamètre nominal comportant un filetage extérieur et, à son extrémité libre et dans son axe, une partie (9) accessible de l'extérieur et permettant l'application d'une clé.

6. Dispositif selon la revendication 5, caractérisé en ce que le foret (3) a une longueur approximativement égale au diamètre de forage.

7. Dispositif selon l'une des revendications 5 ou 6, caractérisé en ce que l'alésage transversal (5) débouche dans la cavité de guidage du foret au niveau de foret (3).

8. Dispositif selon l'une des revendications 1 à 7, caractérisé en ce qu'il comporte un joint annulaire (24), qui est maintenu dans la pièce en forme de selle (2), entoure l'ouverture de la cavité de guidage et prend appui sur la conduite (1), et un autre joint annulaire (19) qui entoure la tige de guidage (7).

9. Dispositif selon l'une des revendications 1 à 8, caractérisé en ce que l'anneau de vissage (15) dépasse de la pièce en forme de selle (2) et qu'un capuchon de protection (20) est vissé sur sa zone comportant un filetage extérieur.

10. Dispositif selon la revendication 9, caractérisé en ce que le capuchon vissé (30) est un dispositif de blocage à vis du foret (3).

11. Dispositif selon l'une des revendications 1 à 10, caractérisé en ce que la pièce en forme de selle (2) comporte, sur son côté tourné vers la conduite (1), un évidement (21) en forme de gouttière qui est adapté à cette conduite et dans lequel débouche l'alésage destiné à recevoir le foret (3) et en ce qu'il comporte une traverse (25) qui est maintenue contre la pièce en forme de selle (2) en étant serrée contre le côté en question de la pièce en forme de selle et qui comporte, en face de l'évidement (21) en forme de gouttière ménagé dans cette pièce (2), un évidement (26) en forme de gouttière correspondant au précédent, de telle manière que les deux évidements (21, 26) se complètent pour constituer une unité de serrage qui maintient la conduite (1) en des emplacements répartis sur toute sa périphérie.

12. Dispositif selon la revendication 11, caractérisé en ce que les évidements (21, 26) en forme de gouttière ont un profil en forme d'arc de cercle et s'étendent sur presque la moitié de la périphérie de la conduite.

13. Dispositif selon la revendication 12, caractérisé en ce que l'évidement (21, 26) contient des enveloppes (22) qui peuvent être mises en place à volonté et ont la même épaisseur sur toute leur longueur et en ce que l'enveloppe (22) qui est engagée dans l'évidement (21) ménagé dans la pièce en forme de selle comporte un alésage (23) qui peut être traversé par le foret (3).

14. Dispositif selon la revendication 13, caractérisé en ce dans l'alésage (23) ménagé dans la pièce en forme de selle, un joint annulaire (24) est engagé de manière à entourer le foret (3) avec un certain jeu et prend appui, par l'un de ses côtés frontaux, contre l'évidement (21) ménagé dans la pièce en forme de selle et, par son autre côté frontal, contre la conduite (1).

15. Dispositif selon l'une des revendications 1 à 14, caractérisé en ce que le prolongement (16), en forme de tubulure, de la garniture de forage (10 qui est engagé, en laissant libre un espace annulaire étroit, dans l'alésage cylindrique (12) de la pièce en forme de selle (2) comporte, à son extrémité libre, une zone (17) de diamètre réduit et en ce que l'alésage transversal (5) débouche dans l'espace annulaire (18) qui est délimité par la zone en question et par l'alésage cylindrique (12) de la pièce en forme de selle (2) et est ouvert dans le sens de l'évidement (21) ménagé dans la pièce en forme de selle (2).

16. Dispositif pour la mise en place d'un appareil de mesure de la pression des fluides, notamment d'huile hydraulique, sur une conduite soumise à la pression d'un milieu, ce dispositif comprenant une pièce en forme de selle qui peut être maintenue contre la conduite (1) de manière à l'enserrer hermétiquement et dans laquelle se trouve un mandrin pointu (3') qui, dirigé vers la conduite (1) et guidé dans le sens axial, est monté de manière à pouvoir effectuer un mouvement de rotation commandé de l'extérieur en maintenant une fermeture hermétique et à pouvoir être vissé en effectuant un déplacement axial limité de telle manière que la pointe (6') du mandrin (3') perce la surface intérieure de la conduite (1), la pièce en forme de selle comportant par ailleurs un aléasge auquel peut se raccorder, d'une manière assurant une fermature étanche, un appareil de mesure de la pression, caractérisé en ce que dans la cavité de guidage du foret hermétiquement isolée de l'extérieur débouche un alésage transversal (3) qui est l'alésage de raccord de l'appareil de mesure de la pression, en ce que la pièce en forme de selle (2) contient une garniture de forage (10) qui y est engagée, en tant que pièce interchangeable, de manière à avoir le même axe que le mandrin (3') et à coopérer avec la tige de guidage (7), que le joint annulaire (19) qui coopère avec la tige de guidage (7) est amintenu dans la garniture de forage (10), que la pièce en forme de selle (2) comporte un alésage fileté (11) qui a le même axe que le mandrin (3') et a un diamètre plus grand que le mandrin (3') et qui, en allant dans la direction de la partie de la pièce en forme de selle qui s'applique contre la conduite (1), se prolonge par un alésage cylindrique (12) de plus petit diamètre, coaxial à l'alésage fileté (11) de la pièce en forme de selle (2), que la garniture de forage (10) est engagée dans l'alésage fileté (11) et s'applique contre les parties marginales délimitant l'entrée de l'aléage 12 de manière à assurer une fermeture hermétique, que la garniture de forage (10) comporte un prolongement (16) en forme de tubulure engagé dans l'alésage cylindrique (12) de manière à laisser libre un espace annulaire étroit et traversé par la tige de guidage (7) du mandrin (3'), que la garniture de forage (10) est serrée, au moyen d'un anneau de vissage (15) qui se visse dans l'alésage fileté (11) de la piède en forme de selle (2) contre les parties marginales déjà mentionnées délimitant l'entrée de l'alésage cylindrique (12) et que l'anneau de vissage (15) comporte un alésage fileté dans lequel se visse la partie (8) du mandrin (3') qui comporte une filetage extérieur.

17. Dispositif selon la revendication 1, caractérisé en ce que le mandrin (3') a une forme conique.

18. Dispositif selon l'une des revendications 16 ou 17, caractérisé en ce que la pointe (6') du mandrin (3') a un angle de pointe de 60° environ, que l'angle de cône de la partie comprise entre la pointe et l'extrémité cylindrique est d'environ 15°, que la partie de transition entre la partie d'extrémité et la partie intermédiaire est arrondie ou en oblique et que la longueur de la partie intermédiaire est au moins légèrement supérieure à l'épaisseur de paroi de la conduite.

19. Dispositif selon l'une des revendications 16 à 18, caractérisé en ce que le mandrin (3') présente, entre la pointe (6') et la partie d'extrémité cylindrique, plusieurs conicités étagées.

20. Dispositif selon l'une des revendications 16 à 19, caractérisé par un mandrin (3') comportant une tige de guidage cylindrique (7) qui le prolonge en lui étant coaxial et a un diamètre plus grand que son diamètre maximal et à laquelle se raccorde, dans la direction de son extrémité située à l'opposé de la pointe (6') du mandrin, une zone (8) ayant un diamètre nominal plus grand et comportant un filetage extérieur et, à son extrémité libre et dans son axe, un dispositif (9) accessible de l'extérieur pour l'application d'une clé.

21. Dispositif selon la revendication 20, caractérisé en ce que l'alésage transversal (5) débouche dans la cavité de guidage au niveau du mandrin (3').

22. Dispositif selon l'une des revendication 16 à 21, caractérisé en ce qu'il comporte un joint annulaire (24), qui est maintenu dans la pièce en forme de selle (2), entoure l'entrée de la cavité de guidage du mandrin et prend appui sur la conduite (1), et un autre joint annulaire (19) qui entoure la tige de guidage (7).

23. Dispositif selon la revendication 16, caractérisé en ce que l'anneau de vissage (15) dépasse de la pièce en forme de selle (2) et en qu'un capuchon de protection (20) est vissé sur sa zone comportant un filetage extérieur.

24. Dispositif selon la revendication 23, caractérisé en ce que le capuchon de protection (20) est un dispositif de blocage à vis du manchon (3').

25. Dispositif selon l'une des revendications 16 à 24, caractérisé en ce que la pièce en forme de selle (2) comporte, sur son côté tourné vers la conduite (1), un évidement (21) en forme de gouttière qui est adapté à la conduite et dans lequel débouche l'alésage destiné à contenir le mandrin (3') et en ce qu'il comporte une traverse (25) qui peut être fixée à la pièce en forme de selle (2) en étant serrée contre le côté en question de la pièce en forme de selle et qui comporte, en face de l'évidement (21) en forme de gouttière ménagé dans cette pièce (2), un évidement (26) en forme de gouttière correspondant au précédent, de telle manière que les deux évidements (21, 26) se complètent pour constituer une unité de serrage qui maintient la conduite (1) en des emplacements répartis sur toute sa périphérie.

26. Dispositif selon la revendication 25, caractérisé en ce que les évidements en forme de gouttière ont un profil en forme d'arc de cercle et s'étendent notamment sur presque la moitié de la périphérie de la conduite.

27. Dispositif selon la revendication 26, caractérisé en ce que l'évidement (21, 26) contient des enveloppes (22) qui peuvent être mises en place à volonté et ont la même épaisseur sur toute leur longueur et en ce que l'enveloppe (22) engagée dans l'évidement (21) ménagé dans la pièce en forme de selle comporte un alésage (23) qui peut être traversé par le mandrin (3').

28. Dispositif selon la revendication 27, caractérisé en ce que, dans l'alésage (23) ménagé dans la pièce en forme de selle, un joint annulaire (24) est engagé de manière à entourer le mandrin (3') avec un certain jeu et prend appui, par l'un de ses côtés frontaux contre l'évidement (21) ménagée dans la pièce en forme de selle et, par son autre côté frontal, contre la conduite (1).

29. Dispositif selon l'une des revendications 16 à 28, caractérisé en ce que le prolongement (16) en forme de tubulure de la garniture de forage (10) qui est engagé, en laissant libre un espace annulaire étroit, dans l'alésage cylindrique (12) de la pièce en forme de selle (2) comporte, à son extrémité libre, une zone (17) de diamètre réduit et en ce que l'alésage transversal (5) débouche dans l'espace annulaire (18) qui est délimité par la zone en question et par l'alésage cylindrique (12) de la pièce en forme de selle (2) et est ouvert dans la direction de l'évidement (21) de la pièce en forme de selle.

## Claims

1. A device for connecting a gauge for measuring the pressure of fluids, especially hydraulic oil, to a pipeline which contains a medium under pressure, which device comprises a saddle (2) which can be tightened onto the pipeline (1) forming a seal, in which saddle an instrument which is directed in towards the pipeline (1) and can be rotated from outside is fixed, forming a seal, so that it is axially guided and can be screwed to a limited extent axially so that only the tip of the instrument cuts the inner side of the pipeline (1) slightly, and wherein a bore is provided to which a pressure gauge can be attached forming a seal, characterized in that the instrument is a pointed draw (3) which produces only continuous shavings, the bore for connecting the pressure guage is a transverse bore which opens into the externally sealed guide for the draw, and in that a bush (10) which is arranged coaxially to the pointed draw (3) and cooperates with the guide shaft (7) is replaceably inserted in the saddle (2), an annular seal (19) cooperating with the guide shaft (7) is held in the bush (10), a threaded bore (11) arranged coaxially to the pointed draw (3) and having a greater diameter than the pointed draw (3) is provided in the saddle (2), which bore changes, in the direction towards the side of the saddle intended to be applied to the pipeline (1), into a cylindrical bore (12) of smaller diameter arranged coaxially to the threaded bore (11) in the saddle (2), the bush (10) is pushed into the threaded bore (11) and applied against the aperture rim portion of the cylindrical bore (12) forming a seal, and moreover the bush (10) comprises a connecting piece (16) which is inserted with a tight push-fit in the cylindrical bore (12) and through which the guide shaft (7) of the pointed draw (3) passes, the bush (10) is tightened onto the afore-mentioned aperture rim portion of the cylindrical bore (12) by means of a screwed-on screw ring (15) in the threaded bore (11) in the saddle (2) and the screw ring (15) comprises a threaded bore in which the externally threaded region (8) of the pointed draw (3) is screwed.

2. A device according to Claim 1, characterized in that the diameter of the bore formed by the pointed draw (3) equals about half the thickness of the wall of the pipe and moreover in that, in particular, the apical angle of the pointed draw (3) is ca. 90°.

3. A device according to Claim 1 or 2, characterized in that the pointed draw (3) has a large rake angle.

4. A device according to any one of Claims 1 to 3, characterized in that the threaded section has a smaller pitch than the length of the tip (6) of the pointed draw.

5. A device according to any one of Claims 1 to 4, characterized by a relatively short pointed draw (3) to which is connected coaxially a cylindrical guide shaft (7), having a greater diameter than the draw, to which is connected coaxially at the end furthest from the tip (6) of the pointed draw an externally threaded region (8) of nominally greated diameter comprising a connection for a key (9) located at its free end which is accessible from outside.

6. A device according to Claim 5, characterized in that the pointed draw (3) has a length which is approximately equal to the diameter of the bore which it forms.

7. A device according to one of Claims 5 or 6, characterized in that the transverse bore (5) opens out into the guide for the draw near the pointed draw (3).

8. A device according to any one of Claims 1 to 7, characterized in that an annular seal (24) surrounding the mouth of the guide for the draw and bearing on the pipeline (1) is arranged held against the saddle (2) and another annular seal (19) is arranged surrounding the guide shaft (7).

9. A device according to any one of Claims 1 to 8, characterized in that the screw ring (15) projects from the saddle (2) and in that a protective cap (20) is screwed onto its externally threaded region.

10. A device according to Claim 9, characterized in that the screw cap (20) is constructed as a means for screw-locking the pointed draw (3).

11. A device according to any one of Claims 1 to 10, characterized in that the saddle (2) comprises a groove-shaped recess (21) in its side facing the pipeline (1) which is adapted to the latter and into which the bore adapted to receive the pointed draw (3) opens, and in that a cross-piece (25) is provided which is fastened to the saddle (2) and can be tightened towards the afore-mentioned side of the saddle, in which cross-piece a groove-shaped recess (26) corresponding with the groove-shaped recess (21) in the saddle (2) is provided opposite the latter recess in such a way that the two recesses (21, 26) together complete a clamping unit which grips the pipeline (1) at positions distributed over its entire circumference.

12. A device according to Claim 11, characterized in that the profiles of the groove-shaped cut-outs (21, 26) are arcs of a circle and moreover, in particular, they each extend almost completely over half the circumference of the pipeline.

13. A device according to Claim 12, characterized in that shells (22) which have equal thicknesses over their entire lengths are provided which are optionally insertable in the recesses (21, 26), and in that in the shell (22) inserted in the recess (21) in the saddle there is a bore (23) through which the pointed draw (3) can pass.

14. A device according to Claim 13, characterized in that an annular seal (24) which surrounds the pointed draw (3) with a clearance is inserted in the bore (23) in the saddle and bears with one of its faces on the recess (21) in the saddle and with another face on the pipeline (1).

15. A device according to any one of Claims 1 to 14, characterized in that the connecting piece (16) of the bush (10), which is inserted with a tight push-fit in the cylindrical bore (12) in the saddle (2), comprises a zone of decreased diameter (17) in its free end portion and in that the transverse bore (5) opens into the annular gap (18), which is open towards the recess (21) in the saddle, formed between this zone and the wall of the cylindrical bore (12) of the saddle (2).

16. A device for connecting a gauge for measuring the pressure of fluids, especially of hydraulic oil, to a pipeline which contains a medium under pressure, which device comprises a saddle (2) which can be tightened onto the pipeline (1) forming a seal in which saddle a pointed spike (3') which is directed in towards the pipeline (1) and can be rotated from outside is fixed, forming a seal, so that it is axially guided and can be screwed to a limited extent axially so that the tip (6') of the spike (3') drills through the inner side of the pipeline (1), and wherein a bore is provided to which a pressure gauge can be attached forming a seal, characterized in that a transverse bore which opens into the externally sealed guide for the spike is provided as the bore for connecting the pressure gauge, that a bush (10) which is arranged coaxially to the spike (3') and cooperates with the guide shaft (7) is replaceably inserted in the saddle (2), an annular seal (19) cooperating with the guide shaft (7) is held in the bush (10), a threaded bore (11) arranged coaxially to the spike (3') and having a greater diameter than the spike (3') is provided in the saddle (2), which bore changes, in the direction towards the side of the saddle intended to be applied to the pipeline (1), into a cylindrical bore (12) of smaller diameter arranged coaxially to the threaded bore (11) in the saddle (2), the bush (10) is pushed into the threaded bore (11) and applied against the aperture rim portion of the cylindrical bore (12) forming a seal, and moreover the bush (10) comprises a connecting piece (16) which is inserted with a tight push-fit in the cylindrical bore (12) and through which the guide shaft (7) of the spike (3') passes, the bush (10) is tightened onto the afore-mentioned aperture rim portion of the cylindrical bore (12) by means of a screwed-on screw ring (15) in the threaded bore (11) in the saddle (2) and the screw ring (15) comprises a threaded bore in which the externally threaded region (8) of the spike (3') is screwed.

17. A device according to Claim 16, characterized in that the spike (3') is made with a conical shape.

18. A device according to Claim 16 or 17, characterized in that the tip (6') of the spike (3') has an apical angle of about at least 60°, the cone angle between the tip and the cylindrical end part is about 15°, the transitional region between the end portion and the intermediate part is rounded or bevelled, and the length of the intermediate part is at least slightly greater than the wall thickness of the pipeline.

19. A device according to any one of Claims 16 to 18, characterized in that the spike (3') comprises a plurality of steps in conicity between the tip (6') and the cylindrical end part.

20. A device according to any one of Claims 16 to 19, characterized by a spike (3') to which is connected coaxially a cylindrical guide shaft (7), having a greater diameter than the maximum diameter of the spike, to which, at the end furthest from the tip (6') of the spike, is connected coaxially an externally threaded region (8) of nominally greater diameter comprising a connection for a key (9) located at its free end which is accessible from outside.

21. A device according to Claim 20, characterized in that the transverse bore (5) opens out into the guide for the boring appliance near the spike (3').

22. A device according to any one of Claims 16 to 21, characterized in that an annular seal (24) surrounding the mouth of the guide for the spike and bearing on the pipeline (1) is arranged held against the saddle (2) and another annular seal (19) is arranged surrounding the guide shaft (7).

23. A device according to Claim 16, characterized in that the screw ring (15) projects from the saddle (2) and in that a protective cap (20) is screwed onto its externally threaded region.

24. A device according to Claim 23, characterized in that the screw cap (20) is constructed as a screw-locking means for the spike (3').

25. A device according to any one of Claims 16 to 24, characterized in that the saddle (2) comprises a groove-shaped recess (21) in its side facing the pipeline (1) which is adapted to the latter and into which the bore adapted to receive the spike (3') opens, and in that a cross-piece (25) is provided which is fastened to the saddle (2) and can be tightened towards the afore-mentioned side of the saddle, in which cross-piece a groove-shaped recess (26) corresponding to the groove-shaped recess (21) in the saddle (2) is provided opposite the latter recess in such a way that the two recesses (21, 26) together complete a clamping unit which grips the pipeline (1) at positions distributed over its entire circumference.

26. A device according to Claim 25, characterized in that the profiles of the groove-shaped cut-outs (21, 26) are arcs of a circle and moreover, in particular, they each extend almost completely over half the circumference of the pipeline.

27. A device according to Claim 26, characterized in that shells (22) which have equal thicknesses over their entire lengths are provided which are optionally insertable in the recesses (21, 26), and in that in the shell (22) inserted in the recess (21) in the saddle there is a bore (23) through which the spike (3') can pass.

28. A device according to Claim 27, characterized in that an annular seal (24) which surrounds the spike (3') with a clearance is inserted in the bore (23) in the saddle and bears with one of its faces on the recess (21) in the saddle and with its other face on the pipeline (1).

29. A device according to any one of Claims 16 to 28, characterized in that the connecting piece (16) of the bush (10), which is inserted with a tight push-fit in the cylindrical bore (12) in the saddle (2), comprises a zone of decreased diameter (17) in its free end portion and in that the transverse bore (5) opens into the annular gap (18), which is open towards the recess in the saddle (21), formed between this zone and the wall of the cylindrical bore (12) in the saddle (2).

Fig.1

EP 0 310 601 B1

Fig. 2

EP 0 310 601 B1

2